(19) Europäisches Patentamt
European Patent Office
Office européen des brevets

(11) **EP 2 839 254 B1**

(12) **FASCICULE DE BREVET EUROPEEN**

(45) Date de publication et mention
de la délivrance du brevet:
**30.06.2021 Bulletin 2021/26**

(21) Numéro de dépôt: **13720459.0**

(22) Date de dépôt: **08.04.2013**

(51) Int Cl.:
**G01J 3/12** *(2006.01)*　　　**G01J 3/28** *(2006.01)*

(86) Numéro de dépôt international:
**PCT/FR2013/050761**

(87) Numéro de publication internationale:
**WO 2013/156708 (24.10.2013 Gazette 2013/43)**

(54) **PROCÉDÉ ET DISPOSITIF POUR L'IMAGERIE MULTI-SPECTRALE PAR RECONSTRUCTION.**

VERFAHREN UND VORRICHTUNG ZUR REKONSTRUKTIVEN MULTISPEKTRALEN BILDGEBUNG

METHOD AND DEVICE FOR RECONSTRUCTIVE MULTI-SPECTRAL IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2012 FR 1253579**

(43) Date de publication de la demande:
**25.02.2015 Bulletin 2015/09**

(73) Titulaire: **Fastlite**
**06600 Antibes (FR)**

(72) Inventeurs:
• **KAPLAN, Daniel**
**F-75006 Paris (FR)**
• **MAKSIMENKA, Raman**
**F-91120 Palaiseau (FR)**

(74) Mandataire: **Mazabraud, Xavier**
**Cabinet Moutard**
**3a rue Petigny**
**78000 Versailles (FR)**

(56) Documents cités:
**US-A- 5 216 484** 　　**US-A- 5 216 484**
**US-A1- 2010 185 067** 　**US-A1- 2010 185 067**

• **GLENAR D A: "ACOUSTO-OPTIC IMAGING SPECTROPOLARIMETRY FOR REMOTE SENSING", APPLIED OPTICS, OPTICAL SOCIETY OF AMERICA, WASHINGTON, DC; US, vol. 33, no. 31, 1 novembre 1994 (1994-11-01), pages 7412-7424, XP000477975, ISSN: 0003-6935, DOI: 10.1364/AO.33.007412**
• **HARRIS S E ET AL: "ACOUSTO-OPTICL TUNABLE FILTER", JOURNAL OF THE OPTICAL SOCIETY OF AMERICA, AMERICAN INSTITUTE OF PHYSICS, NEW YORK; US, vol. 59, no. 6, 1 juin 1969 (1969-06-01), pages 744-747, XP000565142, ISSN: 0093-5433, DOI: 10.1364/JOSA.59.000744**
• **GLENAR D A: "ACOUSTO-OPTIC IMAGING SPECTROPOLARIMETRY FOR REMOTE SENSING", APPLIED OPTICS, OPTICAL SOCIETY OF AMERICA, WASHINGTON, DC; US, vol. 33, no. 31, 1 November 1994 (1994-11-01), pages 7412-7424, XP000477975, ISSN: 0003-6935, DOI: 10.1364/AO.33.007412**
• **HARRIS S E ET AL: "ACOUSTO-OPTIC TUNABLE FILTER", JOURNAL OF THE OPTICAL SOCIETY OF AMERICA, AMERICAN INSTITUTE OF PHYSICS, NEW YORK; US, vol. 59, no. 6, 1 June 1969 (1969-06-01), pages 744-747, XP000565142, ISSN: 0093-5433, DOI: 10.1364/JOSA.59.000744**

**EP 2 839 254 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé et un dispositif pour l'imagerie multi-spectrale par reconstruction.

Ce procédé s'applique notamment à la réalisation de séries d'images de scènes à diverses longueurs d'onde λ. La description des scènes par un système de coordonnées bidimensionnel X, Y permet d'obtenir un ensemble de données tridimensionnel selon les coordonnées X, Y, λ. Lorsque le nombre de longueurs d'ondes concernées est élevé, par exemple de l'ordre ou supérieur à cent, cette technique est parfois dénommée imagerie multi-spectrale.

Certaines techniques d'imagerie multi-spectrale sont basées sur l'insertion d'un filtre spectral étroit programmable sur le chemin optique du système d'imagerie. La fonction d'acquisition des données revient alors à réaliser une série d'images pour une série de réglages de la longueur d'onde du filtre, chaque image reflétant simplement la scène totale à la longueur d'onde considérée.

Le capteur d'image peut être soit bidimensionnel, soit monodimensionnel, auquel cas il est fait appel à un balayage mécanique pour acquérir les données dans la deuxième dimension. Le balayage est parfois produit par le déplacement de l'engin porteur de l'instrument (avion ou satellite). Il s'agit de techniques d'imagerie multi-spectrale directe.

Il existe par ailleurs des techniques d'imagerie multi-spectrale par reconstruction qui impliquent une série de mesures en fonction de paramètres physiques et un algorithme de reconstruction pour extraire de ces mesures les images pour chaque longueur d'onde. L'imagerie multi-spectrale par transformée de Fourier est un exemple d'imagerie multi-spectrale par reconstruction.

D'une façon générale, on sait que le filtre acousto-optique programmable (Acousto-Optic Tunable Filter ou AOTF) est un filtre basé sur l'interaction acousto-optique, dans lequel la longueur d'onde optique est sélectionnée par la fréquence d'une onde acoustique. Il présente l'avantage de pouvoir balayer l'ensemble des longueurs d'ondes optiques recherchées rapidement et sans pièces mécaniques mobiles.

Plusieurs matériaux acousto-optiques peuvent être utilisés pour réaliser un filtre acousto-optique programmable, à savoir, de manière non restrictive, le Niobate de Lithium, la Paratellurite (Te02) et les halogénures de Mercure, comme par exemple le Calomel (Hg2Cl2). La Paratellurite est le matériau le plus utilisé. Les halogénures de mercure sont utilisables dans l'infrarouge, aux longueurs d'ondes supérieures à 4 microns où la Paratellurite cesse d'être transparente.

Des instruments d'imagerie multi-spectrale directe utilisant l'AOTF ont été décrits dans la littérature. Il est important dans la réalisation de ce type d'instruments de concevoir le filtre et l'agencement géométrique de telle manière que la longueur d'onde filtrée pour une fréquence acoustique donnée soit essentiellement indépendante du point de la scène observé. Dans ce cas, une série d'images pour une série de fréquences déterminées réalise effectivement simplement la fonction d'acquisition directe précitée d'une série d'images à une série de longueurs d'onde.

Ce procédé de réalisation conduit à des limitations en termes d'ouverture angulaire du système d'imagerie, de résolution spectrale et d'efficacité énergétique de l'instrument.

La conception détaillée du procédé et du dispositif, selon l'invention, nécessite donc de rechercher une combinaison entre une acquisition, une calibration et les mesures des données de manière à obtenir une ouverture angulaire de quelques dizaines de degrés, une haute résolution spectrale et une haute efficacité énergétique du système d'imagerie.

L'invention a pour objet un procédé et un dispositif pour l'imagerie multi-spectrale par reconstruction, utilisant un instrument fixe ou mobile, comprenant :

- des mesures de l'intensité de la lumière, au voisinage d'un plan focal d'une optique, provenant d'une source optique secondaire obtenue par diffraction acousto-optique de la lumière, issue d'une source optique primaire,
- une acquisition desdites mesures de l'intensité de la lumière de ladite source optique secondaire au moyen d'un réseau de capteurs pixélisés mono ou bidimensionnel situé au voisinage dudit plan focal,
- une calibration, pour une fréquence acoustique donnée, d'une première fonction liant, pour chaque point de la source primaire et pour chaque instant, un point image dans le plan focal audit point de la source primaire,
- une calibration, pour une fréquence acoustique donnée, d'une deuxième fonction liant, pour chaque point du plan focal, et pour chaque longueur d'onde de ladite source primaire, la fréquence acoustique permettant ladite diffraction acousto-optique au point dudit plan focal,
- l'obtention de l'intensité de l'image correspondant au point de la source primaire soit par la mesure du signal détecté à un pixel à la position du plan focal, à un instant et pour une fréquence acoustique appliquée satisfaisant approximativement les relations $m=f1(M,t)$ et $fa=f2(m,\lambda)$, soit par l'interpolation de plusieurs mesures effectuées respectivement sur un ou plusieurs pixels du plan focal, à un ou plusieurs instants et avec une ou plusieurs fréquences acoustiques appliquées, chaque combinaison de ces paramètres satisfaisant approximativement aux susdites relations.

Un mode de mise en œuvre du procédé selon l'invention sera décrit ci-après, à titre d'exemple non limitatif, avec référence aux dessins annexés dans lesquels :

La figure 1 est une représentation schématique d'un système d'imagerie multi-spectrale;

La figure 2 est une représentation schématique des vecteurs d'ondes;

La figure 3 est une représentation schématique d'une image obtenue dans une configuration expérimentale.

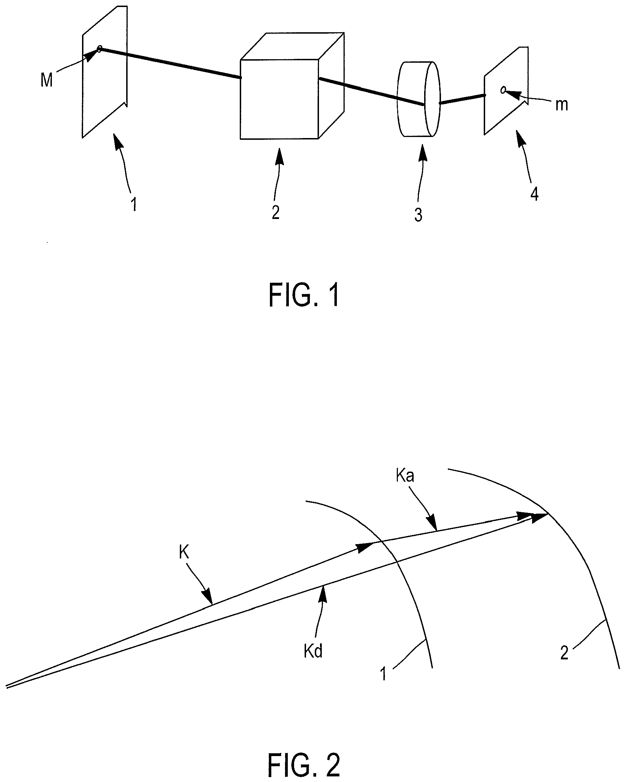

Dans l'exemple représenté sur la figure 1, la scène 1 est supposée à l'infini optique. Un filtre acousto-optique 2 est interposé sur le trajet optique entre la scène 1 et l'objectif 3 d'une caméra. Un capteur d'image 4 est placé dans le plan focal de l'objectif 3.

A chaque point M de la scène 1 de coordonnées (X, Y) correspond un vecteur d'onde optique k pour la propagation optique dans le filtre 2. La diffraction acousto-optique conduit à un faisceau optique diffracté selon la direction $k_d$, qui est focalisé en un point m de coordonnées (x, y) sur le plan focal. Dans le cas d'une scène ne se situant pas à l'infini, une configuration optique sera introduite entre la scène 1 et le filtre 2, qui générera une image virtuelle de la scène à l'infini. Il est alors possible de mener l'analyse de manière équivalente, le point M étant remplacé par un point M', non représenté sur la figure 1, de l'image virtuelle.

Il est nécessaire qu'à tout point M corresponde une direction unique du vecteur d'onde optique k dans le filtre.

Les filtres acousto-optiques sont en général réalisés avec un matériau biréfringent et une onde acoustique de cisaillement qui diffracte le faisceau optique incident se propageant dans un mode donné A, vers un faisceau optique se propageant dans un mode B. L'effet de filtrage est la conséquence de la condition de conservation des vecteurs d'onde ; si k est le vecteur d'onde optique de la lumière incidente, $k_d$ le vecteur d'onde optique de la lumière diffractée et $k_a$ le vecteur d'onde de l'onde acoustique, la condition de Bragg pour que la diffraction ait lieu est :

$$k_d = k + k_a$$

Dans l'exemple représenté sur la figure 2, dans le plan contenant k et $k_a$, les extrémités des vecteurs k et $k_d$ sont respectivement sur deux courbes 1 et 2, qui reflètent les indices en fonction de l'orientation des modes A et B. La condition de Bragg implique que le vecteur $k_a$ relie les extrémités de k et $k_d$.

La direction de $k_a$ étant définie par la géométrie acoustique, la direction de $k_d$ est entièrement déterminée par les courbes caractéristiques d'indices. En l'absence de dispersion spectrale et pour une optique achromatique, le point m associé au point M est donc indépendant de la longueur d'onde, ce qui assure la qualité spatiale de l'imagerie. Dans la pratique, les courbes d'indices peuvent être dépendantes de la longueur d'onde. Dans ce cas, une correction par l'introduction d'un prisme additionnel produisant une déviation chromatique inverse a été proposée dans la littérature. Cet effet de prisme peut avantageusement être réalisé par un choix adéquat de l'orientation de la face de sortie du filtre.

Dans la suite, il sera supposé qu'à tout point M, correspondent une direction k, une direction $k_d$ et un point m image, uniques dans le plan du détecteur. Dans le cas le plus simple, si l'origine dans le plan image est associée à l'origine dans le plan objet, la relation entre les coordonnées pourra s'écrire x=G.X, y=G.Y, où G est en première approximation une constante.

Sur la figure 2, la longueur du vecteur $k_a$ est associée à la fréquence acoustique fa par la relation $|k_a| = 2\pi.fa/V$, où V est la vitesse de l'onde acoustique.

Généralement, $|k_a|$ et donc fa sont dépendants de l'orientation de k. L'orientation de k est déterminée par le point M de la scène associée et détermine l'orientation de $k_d$ et donc le point m sur le plan focal.

La fonction $fa[k,\lambda]$ détermine donc:

une fonction $fam(m,\lambda) = fa(k(m),\lambda)$ et,
une fonction $faM(M,\lambda) = fa(k(M),\lambda)$.

L'instrument est ainsi entièrement caractérisé par deux fonctions f1 et f2. La fonction f1 est une fonction purement géométrique reliant l'objet à l'image par la relation :

$$m = f1(M)$$

Cette fonction f1 est donc indépendante du temps.
Une fonction f2=fam reflétant la réponse spectrale reliant la position m à la fréquence acoustique pour une longueur d'onde donnée :

$$fa = f2(m,\lambda)$$

Le cristal acousto-optique comprend en général un plan de symétrie ; par convention, l'axe 0X est la trace de ce plan de symétrie sur la scène 1.

Il est supposé initialement que la taille de la scène est suffisamment petite pour approximer fa par un développement autour de l'origine, au deuxième ordre, dans lequel les termes linéaires en Y sont nuls par symétrie, soit :

$$faM(M(X,Y),\lambda) = faM(0,0) + a.X + b.X^2 + c.Y^2 \qquad \text{(formule 1)}$$

La conception classique des AOTF dans les cristaux biréfringents consiste à utiliser une configuration du cristal et du vecteur d'onde optique k qui annule le coefficient $a$ de la formule 1, puis à limiter la dimension de l'objet observé pour que les termes quadratiques conduisent à une variation de fréquence inférieure à la résolution spectrale du dispositif.

L'art antérieur concernant le filtrage spectral par AOTF est décrit dans GLENAR D. A: "ACOUSTO-OPTIC IMAGING SPECTROPOLARIMETRY FOR REMOTE SENSING", APPLIED OPTICS et HARRIS S.E. ET AL: "ACOUSTO-OPTICL TUNABLE FILTER", JOURNAL OF THE OPTICAL SOCIETY OF AMERICA, et aussi dans les brevets suivants :

Le brevet U.S. Patent Number 4,052,121 intitulé « Noncollinear Tunable Acousto-Optic Filter » décrit la condition sur les orientations des vecteurs d'onde acoustique et optique, qui conduit à l'annulation du coefficient $a$. Cette condition est dénommée Condition d'Accord de Phase non Critique, en Anglais « Non-Critical Phase Matching Condition », en abrégé : NPM.

Dans le cas de dispositifs à base de Paratellurite, ceci conduit à des dispositifs de dimensions centimétriques, ayant une ouverture angulaire de quelques degrés, une résolution spectrale de l'ordre d'une dizaine de cm$^{-1}$ et à la nécessité d'une puissance d'une dizaine de watts pour atteindre une efficacité proche de l'unité à la longueur d'onde de 1 micromètre.

Il est connu que ces performances déterminées par la condition NPM ne sont pas optimales.

Le brevet U.S. Patent Number 5,329,397 propose une autre configuration, dite en alignement de faisceau (« beam colinear »), telle que l'orientation du vecteur d'onde optique soit parallèle à l'axe du faisceau acoustique (direction de groupe).

Dans ce cas, il est possible d'obtenir à dimensions équivalentes une résolution typiquement deux à quatre fois meilleure, et une efficacité de diffraction typiquement huit à dix fois meilleure. Cependant une telle configuration est en condition d'accord de phase critique (« Critical Phase Matching ou CPM »). Le coefficient $a$ est non nul, ce qui conduit à un champ d'image très limité selon la direction X pour une fréquence acoustique donnée : dans une configuration CPM, seuls certains points de l'image situés approximativement sur une ligne de X donné satisfont à l'équation $f=fa(M,\lambda)$, pour une fréquence f donnée. L'ouverture dans une méthode simple d'imagerie directe est réduite à des valeurs de l'ordre typique du dixième de degré.

La présente invention présente un procédé d'imagerie par reconstruction reposant sur la connaissance de la fonction $f2(m,\lambda)$, qui est applicable à toutes les configurations qu'elles soient CPM ou NPM. Elle permet donc de bénéficier des performances des configurations CPM telle que la configuration en alignement de faisceau décrit dans le brevet U.S. Patent Number 5,329,397.

Si la fonction $f2(m,\lambda)$ a pu être déterminée avec précision par une combinaison d'analyse théorique et de mesures de calibration, alors l'acquisition d'une série de mesures à une série de fréquences acoustiques permet de déduire les images monochromatiques recherchées. En effet, si Im[m,fa] représente l'intensité mesurée au point m du foyer, correspondant au point M de la scène, pour une fréquence acoustique fa, alors l'intensité recherchée est :

$$I(M,\lambda) = Im(f1(M,\lambda), f2(f1(M,\lambda)\lambda) \qquad \text{(formule 2)}$$

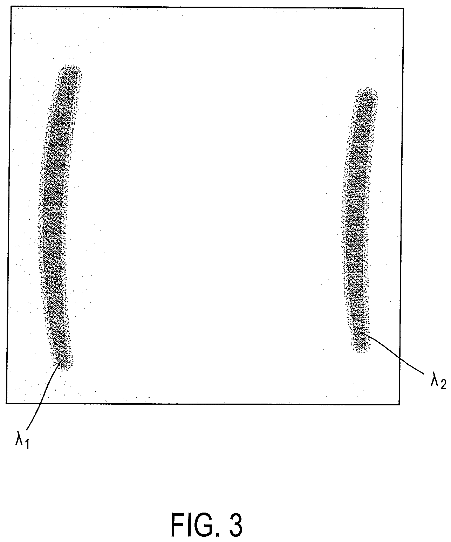

La figure 3 montre l'image obtenue dans une configuration expérimentale correspondant à la figure 1, selon une configuration dite en alignement de faisceau telle que décrite dans le brevet U.S. Patent Number 5,329,397, la scène uniforme étant éclairée par une lampe à vapeur de mercure, produisant un doublet à $\lambda1$ et $\lambda2$ et en présence d'une onde acoustique monochromatique.

L'image est composée de deux lignes de forme parabolique, correspondant chacune à une raie respective du doublet.

La formule 1, comprenant un terme $a$ non nul, et en négligeant le terme quadratique en X, l'ensemble des points satisfaisant une condition $f=fa$ est effectivement une parabole de la forme $X = (c/a).Y^2 + $ este, la constante étant dépendante de $\lambda$.

**Exemple de mise en œuvre**

Il s'agit d'un instrument destiné à la fonction d'imagerie multi-spectrale à une longueur d'onde λ voisine de 10 micromètres.

Il est constitué :

- d'un filtre acousto-optique, réalisé en Calomel (Hg2Cl2) de longueur L présentant une ouverture de 10x10 mm2, associée à la dimension transverse du faisceau acoustique,
- d'un objectif derrière le filtre de dimension supérieure à 10x10 mm2, de focale 40 mm, l'ouverture optique du système étant ainsi égale à f/4, et
- d'une matrice de détecteurs dans le plan focal comprenant 500x500 pixels, d'une dimension totale de 10x10 mm$^2$ pour une dimension de pixel de 20 micromètres,
- d'un générateur d'ondes radiofréquences à fréquence variable permettant de générer des ondes acoustiques dans ledit filtre acousto-optique,
- des moyens de calcul permettant la reconstruction d'images à une série de longueurs d'onde donnée.

La résolution angulaire limitée par diffraction d'un tel système est d'environ un milli-radian et la tâche de diffraction correspond à 2 pixels, ce qui satisfait au critère d'échantillonnage de Nyquist.

En utilisant la formule :

$$\frac{d\lambda}{\lambda} = \frac{df}{f} = \left(\frac{0.8.\lambda}{\Delta n.Cos(\theta)^2 L}\right)^2$$

l'homme de l'art peut choisir l'orientation de propagation optique θ et la longueur L pour un matériau de biréfringence donnée Δn, afin d'obtenir la résolution spectrale voulue pour une lumière collimatée.

Il n'y aura pas lieu d'augmenter la résolution spectrale très au delà de la variation de fréquence d'accord du filtre acousto-optique correspondant à une déviation égale à la résolution angulaire du système dθ qui limitera de toute manière la résolution spectrale pratique.

Cette résolution spectrale, pour un angle de propagation optique θ et un angle de propagation acoustique α, est donnée par :

$$\frac{d\lambda}{\lambda} = d\theta\left(2.Tan(\theta) - Tan(\theta - \alpha)\right)^2$$

Pour la suite de l'exemple, la résolution spectrale est supposée être la résolution donnée par la formule ci dessus. Cette résolution sera environ df=f.$10^{-3}$ dans ce cas.

Après avoir calibré la fonction f2 selon les méthodes décrites ci-après, l'utilisateur peut réaliser une série d'acquisitions d'images, en changeant pour chaque image la fréquence acoustique.

Avantageusement, il utilisera une liste de fréquences de pas a<df/2 qui lui permettra de satisfaire au critère d'échantillonnage de Nyquist dans l'espace des fréquences. Dans la suite, on supposera a=df/2.

La liste devra couvrir les fréquences d'accord pour toute la bande de longueur d'onde analysée, pour tous les pixels.

Par exemple pour une bande de 20% autour de la longueur d'onde centrale de 10 microns et si f0 est la fréquence d'accord pour le pixel central à 10 microns, les fréquences à couvrir pour un échantillonnage complet de la bande iront de :

$$0.9\ f0-250.df/2\ \text{à}\ 1.1.f0+250.df/2.$$

Ceci correspond dans le cas envisagé à environ 900 mesures.

Une fois réalisées ces mesures, une image à une longueur d'onde λ donnée dans la bande sera obtenue de la manière suivante :

Soit m=f1(M) un pixel du plan focal correspondant à un point M de la scène analysée ; pour ce pixel m la valeur fa=f2(m,λ) sera calculée. L'indice i sera déterminé dans la liste croissante des fréquences ci-dessus tel que fj<fa<fj+1. Les deux fréquences fj et fj+1 constituent deux approximations de fa avec une précision meilleure que la résolution du système. Selon la précision finale voulue, la valeur de l'intensité sera choisie soit parmi les deux valeurs Im(m,fi) et Im(m,fi+1), soit en effectuant une interpolation linéaire entre Im(m,fi) ou Im(m,fi+1). Par extension, l'utilisateur pourra souhaiter réaliser une opération de filtrage spatial combinant plusieurs points m, ce qui le conduira à une opération d'interpolation à plusieurs dimensions spatiales et fréquentielles.

Cette opération répétée sur l'ensemble des points M et l'ensemble des longueurs d'ondes désirées fournira l'ensemble tridimensionnel voulu. Idéalement, l'échantillonnage portera au minimum sur une liste de longueurs d'onde ayant un pas dλ/2 où dλ correspond à la résolution spectrale, c'est-à-dire :

$$d\lambda = 10^{-3}.\lambda a = 10nm,$$

pour satisfaire au critère d'échantillonnage de Nyquist.

Dans cet exemple, 400 valeurs de λ sont obtenues. La taille totale du cube de données finales est de 100 millions de données élémentaires.

**Calibration** :

La calibration de la fonction f2 pourra être réalisée en utilisant une source monochromatique, une source de raies spectrales, comme la lampe à mercure ou un monochromateur. Par exemple une source laser collimatée, peut être orientée par rapport à l'arrangement pour être focalisée en divers points de la matrice de détecteurs.

Pour chaque pixel, la fréquence acoustique correspondant à la longueur d'onde du laser sera mesurée. La connaissance a priori des indices optiques en fonction de la longueur d'onde pourra ensuite permettre à l'homme de l'art de déduire la fréquence acoustique à toute longueur d'onde par l'utilisation des formules connues.

Si la précision expérimentale est compatible avec une formule approximée comme la formule 1, la calibration se réduira à la détermination des quantités fa[0,0], a, b, c., sans nécessiter l'analyse de tous les pixels.

**Applications du** procédé :

Un intérêt important de l'invention est son application à la réalisation d'imageurs multi-spectraux dans l'infrarouge, et plus précisément dans une gamme de longueurs d'onde comprise entre 5 et 20 micromètres.

En effet, l'application des formules donnant l'efficacité de diffraction à la configuration selon le brevet U.S. Patent Number 4,052,121 conduit pour une longueur d'onde de 10 microns à des puissances acoustiques allant de la centaine de watts au kW, selon les matériaux utilisés ; la méthode standard d'imagerie directe est alors inapplicable dans la plupart des contextes pratiques d'utilisation.

En utilisant une configuration colinéaire et une longueur de dispositif de quelques centimètres, on réduit la puissance à quelques dizaines de watts pour un dispositif à base de Calomel.

Par ailleurs, la méthode directe utilisant la configuration selon le brevet U.S. Patent Number 5,329,397 limite l'ouverture angulaire à quelques degrés. La méthode par reconstruction proposée permet d'atteindre des ouvertures angulaires de quelques dizaines de degrés, dans toute configuration. L'ouverture angulaire est seulement limitée par le rapport entre les dimensions longitudinales et transversales du faisceau acoustique, qui peuvent être choisies de manière arbitraire dans les limites de réalisation technologique des cristaux et de puissance acoustique permise.

**Extension à un instrument porté par une plate-forme mobile**

L'invention pourra être étendue au cas d'un système d'imagerie porté par une plate-forme mobile, comme par exemple un avion ou un satellite. Pour un porteur animé d'une vitesse V constante par rapport au sol, il est connu dans l'état de l'art que des images non résolues spectralement d'une scène au sol sont obtenues en sommant des images successives convenablement décalées pour tenir compte de l'avancement de la plate-forme entre chaque image.

D'une manière plus précise, si le déplacement est selon la direction X, G est le grandissement du système optique sans aberration, et si l'origine dans le plan X,Y est choisie conventionnellement comme le point objet correspondant à l'origine dans le plan focal à l'instant 0, le point correspondant à M(X,Y) à l'instant t a pour coordonnées (X-Vt)G, YG.

La fonction f1 est dans ce cas une fonction fl(M,t) telle que m(t)=f1(M,t).

La sommation d'une série de mesures à des temps ti, convenablement décalées les unes par rapport aux autres, selon l'axe x, permet d'obtenir une image moyennée à fin de réduction de bruit.

Dans la suite, un système d'imagerie multi-spectrale sera examiné sur un porteur mobile, tel que la direction X dans le plan de diffraction soit alignée avec la direction de la vitesse V de la plate-forme. Les variables X et x seulement seront considérées en négligeant les variations de fréquence acoustique d'accord selon la direction perpendiculaire et un système optique sera caractérisé par un simple grandissement G. A partir des principes de l'invention, l'homme de l'art saura aisément l'étendre à des cas plus généraux.

Il est apparent que la longueur d'onde d'accord du filtre pour un point donné observé va varier au cours du temps, ce qui empêchera de réaliser la moyenne ci-dessus. En inversant la fonction $f2(f1(M,t),\lambda)$, il est possible d'extraire une fonction f3 reliant le point M, la fréquence acoustique fa et la longueur d'onde $\lambda$ à l'instant t de mesure, soit t = $f3(M,fa,\lambda)$. Ainsi de manière très analogue à la procédure décrite précédemment pour un instrument fixe qui opérait à des fréquences successives différentes, il sera possible à partir d'une série de mesures effectuées à fréquence acoustique fixe fa à des instants ti successifs, fournissant les données Imesuré(m,ti), d'extraire une image à une longueur d'onde donnée par l'expression :

$$I(M,\lambda) = Imesuré[f1(M,t),t] \ \ \text{où } t = f3(M,fa,\lambda)$$

De manière analogue à l'exemple de l'instrument fixe décrit plus haut, l'utilisateur saura dans ce cas mettre en œuvre les critères d'échantillonnage et les méthodes d'interpolation nécessaires pour définir la séquence de mesure et réaliser la méthode d'extraction.

Pour une seule fréquence fixe, la méthode ne fournit qu'une bande de longueurs d'ondes limitée, définie par la variation de la longueur d'onde d'accord dans le champ balayé. Si une gamme plus importante est souhaitée, l'utilisateur pourra pour chaque étape ti de la mesure réaliser plusieurs images avec des fréquences différentes de manière à permettre par recouvrement la couverture de toute la région spectrale désirée par cumul des bandes correspondant à chacune des fréquences choisies ; les acquisitions comprendront donc plusieurs séries de mesures, chacune caractérisée par une fréquence acoustique donnée, mises en œuvre de telle manière que pour chaque longueur d'onde désirée, il existe au moins une fréquence acoustique et un pixel permettant l'accord.

## Revendications

1. Procédé pour l'imagerie multispectrales d'une source primaire (1) par reconstruction, utilisant un instrument fixe ou mobile, **caractérisé en ce qu'**il comprend :

   - des mesures de l'intensité de la lumière, au voisinage d'un plan focal (4) d'une optique (3), provenant d'une source optique secondaire obtenue par diffraction acousto-optique (2) de la lumière dans un dispositif acousto-optique, issue de la source optique primaire (1),
   - une acquisition des dites mesures de l'intensité de la lumière de ladite source optique secondaire au moyen d'un réseau de capteurs pixélisés mono ou bidimensionnel situé au voisinage dudit plan focal (4),
   - une opération de calibration utilisant une source primaire (1) monochromatique, consistant à mesurer pour chaque pixel (m) dans le plan focal (4), la fréquence acoustique fa correspondant à la longueur d'onde de ladite source primaire monochromatique et produisant une diffraction acousto-optique (2) au point (m),
   - la détermination, en utilisant cette calibration et la connaissance a priori de la variation des indices optiques du matériau constituant le dispositif acousto-optique avec la longueur d'onde $(\lambda)$, de la fonction $f2(m,\lambda)$ fournissant pour toute longueur d'onde $(\lambda)$ et tout point image (m) la valeur de la fréquence acoustique produisant la dite diffraction acousto-optique de la longueur d'onde $(\lambda)$ au pixel (m),
   - l'acquisition des images multispectrales par une combinaison d'acquisitions des susdits capteurs pixelisés, soit pour une série de fréquences acoustiques distinctes, soit par un déplacement relatif de l'instrument par rapport à la source primaire (1) soit par une combinaison de séries des dites fréquences et dudit déplacement, une intensité recherchée pour chaque point (M) de la source primaire (1)

   $$I(M,\lambda) = Im(f1(M,\lambda,t), f2(f1(M,\lambda,t),\lambda))$$

   étant obtenue à partir de l'intensité mesurée Im au pixel m correspondant au point (M) de la source primaire (1), à partir de la connaissance de la susdite fonction $f2(m,\lambda)$ et, pour chaque acquisition, de la relation f1 entre chaque point (M) de la source primaire (1) et chaque pixel (m).

2. Procédé selon la revendication 1, appliqué à la mesure par un instrument fixe en utilisant une série de mesures à des instants successifs et à des fréquences acoustiques différentes afin de satisfaire la condition de diffraction acousto-optique pour tous les pixels (m) et les longueurs d'onde désirées $(\lambda)$, où chaque pixel (m) est une fonction indépendante du temps fl(M) d'un point (M) de la source primaire (1).

**3.** Procédé selon la revendication 1, appliqué à la mesure par un instrument porté par une plate-forme mobile, **caractérisé en ce que** la susdite mesure du signal détecté à un pixel (m) du plan focal (4) est effectuée à des instants (t) successifs, avec la même fréquence acoustique pour chaque mesure, afin d'obtenir pour les longueurs d'onde (λ) situées dans une plage couvrant totalement ou partiellement la plage désirée, au moins une mesure, à un instant (t), satisfaisant approximativement les fonctions m=f1(M,t) et fa=f2(m,λ).

**4.** Procédé selon la revendication 1, **caractérisé en ce que** plusieurs séries des susdites mesures sont effectuées pour permettre une couverture d'une plage de longueurs d'onde (λ) augmentée, chacune desdites séries des susdites mesures utilisant une fréquence acoustique différente, afin d'obtenir pour les longueurs d'onde (λ) situées dans une plage couvrant totalement ou partiellement la plage désirée, au moins une mesure, à un instant (t), satisfaisant approximativement les fonctions m=f1(M,t) et fa=f2(m,λ).

**5.** Dispositif pour la mise en œuvre du procédé selon l'une quelconque des revendications 1 à 4, **caractérisé en ce qu'**il comprend :

  - un détecteur matriciel mono ou bidimensionnel,
  - un objectif réalisant l'image d'un objet à l'infini sur ledit détecteur matriciel,
  - un montage optionnel pour réaliser une image virtuelle à l'infini de l'objet,
  - un dispositif acousto-optique configuré pour que le faisceau optique diffracté pénètre dans ledit objectif,
  - un générateur d'ondes radiofréquences à fréquence variable permettant de générer des ondes acoustiques dans ledit dispositif acousto-optique,
  - des moyens de calcul permettant la reconstruction d'images à une série de longueur d'onde donnée.

**6.** Dispositif selon la revendication 5, **caractérisé en ce que** ledit dispositif acousto-optique est réalisé dans un matériau biréfringent selon une configuration colinéaire.

**7.** Dispositif selon la revendication 6, **caractérisé en ce que** ledit matériau biréfringent est la Paratellurite, le Niobate de Lithium, ou un Halogénure de Mercure.

**8.** Dispositif selon la revendication 7, **caractérisé en ce que** ledit détecteur matriciel mono ou bidimensionnel est sensible dans l'infrarouge, dans une gamme de longueurs d'ondes comprise entre 5 et 20 micromètres.

**9.** Utilisation d'un dispositif selon l'une quelconque des revendications 5 à 8 pour la mise en œuvre d'un procédé selon l'une quelconque des revendications 1 à 4.

**10.** Utilisation selon la revendication 9, à bord d'une plate-forme mobile, notamment un avion ou un satellite, d'un dispositif selon l'une quelconque des revendications 5 à 9 pour la mise en œuvre d'un procédé selon la revendication 3.

**Patentansprüche**

**1.** Verfahren zur multispektralen Bildgebung einer Primärquelle (1) durch Rekonstruktion mittels eines feststehenden oder eines mobilen Instruments, **dadurch gekennzeichnet, dass** das Verfahren umfasst:

  - Messungen der Intensität des Lichts, das aus einer Sekundärlichtquelle stammt, die durch akustooptische Beugung (2) des Lichts aus der Primärlichtquelle (1) in der akustooptischen Vorrichtung erhalten wird, in der Nähe einer Brennebene (4) einer Optik (3),
  - eine Erfassung der Messungen der Intensität des Lichts der Sekundärlichtquelle mittels einer ein- oder zweidimensionalen Anordnung gepixelter Sensoren in der Nähe der Brennebene (4),
  - einen Kalibrierungsvorgang unter Nutzung einer monochromatischen Primärquelle (1), der darin besteht, dass für jedes Pixel (m) in der Brennebene (4) die akustische Frequenz fa entsprechend einer Wellenlänge der monochromatischen Primärquelle gemessen und an dem Punkt (m) eine akustooptische Beugung (2) erzeugt wird,
  - das Bestimmen der Funktion f2(m,A) unter Nutzung dieser Kalibrierung und der Apriori-Kenntnis der Variation von optischen Indizes des die akustooptische Vorrichtung bildenden Materials mit der Wellenlänge (λ), wobei für jede Wellenlänge (λ) und jeden Bildpunkt (m) der Wert der akustischen Frequenz bereitgestellt wird, der die akustooptische Beugung der Wellenlänge (λ) an dem Pixel (m) erzeugt,

- das Erfassen der multispektralen Abbildungen durch eine Kombination von Erfassungen der obengenannten gepixelten Sensoren entweder für eine Reihe von verschiedenen akustischen Frequenzen oder durch eine relative Verschiebung des Instruments zur Primärquelle (1) oder durch eine Kombination von Reihen der besagten Frequenzen und der besagten Verschiebung, wobei eine gewünschte Intensität für jeden Punkt (M) der Primärquelle (1)

$$I(M,\lambda) = Im(f1(M,\ \lambda,\ t),\ f2(f1(M,\lambda,t),\ \lambda))$$

erhalten wird aus der gemessenen Intensität Im an dem Pixel m, das dem Punkt (M) der Primärquelle entspricht, aus den Erkenntnissen der obengenannten Funktion f2(m,A) und, für jede Erfassung, aus der Relation f1 zwischen dem Punkt (M) der Primärquelle (1) und jedem Pixel (m).

2. Verfahren nach Anspruch 1, angewendet bei der Messung mittels eines feststehenden Instruments unter Verwendung einer Reihe von Messungen zu aufeinanderfolgenden Zeitpunkten und mit unterschiedlichen akustischen Frequenzen, um die akustooptischen Beugungsbedingungen für alle Pixel (m) und die gewünschten Wellenlängen (λ) zu erfüllen, wobei jedes Pixel (m) eine zeitunabhängige Funktion f1(M) eines Punkts (M) der Primärquelle (1) ist.

3. Verfahren nach Anspruch 1, angewendet bei der Messung mittels eines von einer mobilen Plattform getragenen Instruments, **dadurch gekennzeichnet, dass** die vorgenannte Messung des detektierten Signals an einem Pixel (m) der Brennebene (4) zu aufeinanderfolgenden Zeitpunkten (t) mit der gleichen akustischen Frequenz pro Messung durchgeführt wird, um für die Wellenlängen (λ), die in einem Bereich liegen, der den gewünschten Bereich ganz oder teilweise abdeckt, mindestens eine Messung zu einem Zeitpunkt (t) zu erhalten, die näherungsweise die Funktionen m=f1(M,t) und fa=f2(m,A) erfüllt.

4. Verfahren nach Anspruch 1, **dadurch gekennzeichnet, dass** mehrere Reihen der vorgenannten Messungen durchgeführt werden, um die Abdeckung eines größeren Bereichs an Wellenlängen (λ) zu ermöglichen, wobei jede der Reihen der vorgenannten Messungen eine andere akustische Frequenz nutzt, um für die Wellenlängen (λ), die in dem Bereich liegen, der den gewünschten Bereich ganz oder teilweise abdeckt, mindestens eine Messung zu einem Zeitpunkt (t) zu erhalten, die näherungsweise die Funktionen m=f1(M,t) und fa=f2(m,λ) erfüllt.

5. Vorrichtung zur Durchführung des Verfahrens nach einem der Ansprüche 1 bis 4, **dadurch gekennzeichnet, dass** die Vorrichtung umfasst:

    - einen ein- oder zweidimensionalen Matrix-Detektor;
    - ein Objektiv, das ein Objekt auf dem Matrix-Detektor nach unendlich abbildet;
    - eine optionale Baugruppe zur Realisierung einer virtuellen Abbildung des Objekts nach unendlich;
    - eine akustooptische Vorrichtung, die derart konfiguriert ist, dass der abgelenkte Lichtstrahl in die Linse eintritt,
    - ein Generator für Radiofrequenzwellen mit variabler Frequenz, der es ermöglicht, Schallwellen in der akustooptischen Vorrichtung zu erzeugen,
    - Rechenmittel, die die Rekonstruktion von Bildern in einem bestimmten Wellenlängenbereich ermöglichen.

6. Vorrichtung nach Anspruch 5, **dadurch gekennzeichnet, dass** die akustooptische Vorrichtung aus einem doppelbrechenden Material in einer kollinearen Konfiguration hergestellt ist.

7. Vorrichtung nach Anspruch 6, **dadurch gekennzeichnet, dass** das Material Paratellurit, Lithiumniobat oder ein Qucksilberhalogen ist.

8. Vorrichtung nach Anspruch 7, **dadurch gekennzeichnet, dass** der ein- oder zweidimensionale Matrix-Detektor infrarotempfindlich ist in einem Wellenlängenspektrum zwischen 5 und 20 Mikrometer.

9. Verwendung einer Vorrichtung nach einem der Ansprüche 5 bis 8 zur Durchführung des Verfahrens nach einem der Ansprüche 1 bis 4.

10. Verwendung einer Vorrichtung nach einem der Ansprüche 5 bis 9 gemäß Anspruch 9 an Bord einer mobilen Plattform, insbesondere ein Schiff oder ein Satellit, zur Durchführung eines Verfahrens nach Anspruch 3.

**Claims**

1. Method for the reconstructive multi-spectral imaging of a primary source (1), using a fixed or moveable instrument, **characterised in that** it comprises:

   - measuring the intensity of the light, in the vicinity of a focal plane (4) of an optic (3), coming from a secondary optical source obtained by acousto-optic diffraction (2) of the light in an acousto-optic device originating from the primary optical source (1),
   - acquiring said measurements of the intensity of the light from said secondary optical source by means of an array of one or two-dimensional pixelated sensors located in the vicinity of said focal plane (4),
   - calibrating using a monochromatic primary source (1), consisting of measuring for each pixel (m), in the focal plane (4), the acoustic frequency fa corresponding to the wavelength of said monochromatic primary source and producing an acousto-optic diffraction (2) at the point (m),
   - determining, by using this calibration and the a priori knowledge of the variation of the optical indices of the material constituting the acousto-optic device with the wavelength ($\lambda$), of the function f2(m,$\lambda$) supplying for any wavelength ($\lambda$) and any image point (m) the value of the acoustic frequency producing said acousto-optic diffraction of the wavelength ($\lambda$) at the pixel (m),
   - acquiring multi-spectral images by a combination of acquisitions of the aforesaid pixelated sensors, either for a series of distinct acoustic frequencies, or by a relative movement of the instrument in relation to the primary source (1) or by a combination of series of said frequencies and of said movement, an intensity sought for each point (M) of the primary source (1)

$$I(M,\lambda)=Im(f1(M,\lambda,t),\ f2(f1(M,\lambda,t),\lambda))$$

   being obtained from the intensity measured Im at the pixel m corresponding to the point (M) of the primary source (1), from the knowledge of the aforesaid function f2(m,$\lambda$) and, for each acquisition, of the relation f1 between each point (M) of the primary source (1) and each pixel (m).

2. Method according to claim 1, applied to the measurement by a fixed instrument by using a series of measurements at successive instants and at different acoustic frequencies in order to satisfy the acousto-optic diffraction condition for all of the pixels (m) and the desired wavelengths ($\lambda$), where each pixel (m) is a function independent of time fl(M) of a point (M) of the primary source (1).

3. Method according to claim 1, applied to the measurement by an instrument supported by a moveable platform, **characterised in that** the aforesaid measurement of the signal detected at a pixel (m) of the focal plane (4) is made at successive instants (t), with the same acoustic frequency for each measurement, in order to obtain, for the wavelengths ($\lambda$) located in a range covering completely or partially the desired range, at least one measurement, at an instant (t), satisfying approximately the functions m=f1(M,t) and fa=f2(m,$\lambda$).

4. Method according to claim 1, **characterised in that** a plurality of series of the aforesaid measurements are made to enable a coverage of an increased range of wavelengths ($\lambda$), each of said series of said measurements using a different acoustic frequency, in order to obtain, for the wavelengths ($\lambda$) located in a range covering completely or partially the desired range, at least one measurement, at an instant (t), satisfying approximately the functions m=f1(M,t) and fa=f2(m,$\lambda$).

5. Device for implementing the method according to any one of claims 1 to 4, **characterised in that** it comprises:

   - a one or two-dimensional matrix detector,
   - a lens producing the image of an object at infinity on said matrix detector,
   - an optional assembly for producing a virtual image at infinity of the object,
   - an acousto-optic device configured so that the diffracted optical beam enters said lens,
   - a variable frequency radiofrequency wave generator making it possible to generate acoustic waves in said acousto-optic device,
   - computing means making it possible to reconstruct images at a given series of wavelengths.

6. Device according to claim 5, **characterised in that** said acousto-optic device is produced in a birefringent material according to a colinear configuration.

7. Device according to claim 6, **characterised in that** said birefringent material is paratellurite, lithium niobate, or a mercury halide.

8. Device according to claim 7, **characterised in that** said one or two-dimensional matrix detector is sensitive in the infrared spectrum, in a range of wavelengths between 5 and 20 micrometres.

9. Use of a device according to any one of claims 5 to 8 for implementing a method according to any one of claims 1 to 4.

10. Use according to claim 9, on board a moveable platform, particularly an aircraft or a satellite, of a device according to any one of claims 5 to 9 for implementing a method according to claim 3.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4052121 A

- US 5329397 A

**Littérature non-brevet citée dans la description**

- **GLENAR D. A.** ACOUSTO-OPTIC IMAGING SPECTROPOLARIMETRY FOR REMOTE SENSING. *APPLIED OPTICS*

- **HARRIS S.E. et al.** ACOUSTO-OPTICL TUNABLE FILTER. *JOURNAL OF THE OPTICAL SOCIETY OF AMERICA*